# EUROPÄISCHE PATENTSCHRIFT

(11) **EP 2 809 541 B1**
(45) Veröffentlichungstag und Bekanntmachung des Hinweises auf die Patenterteilung: **24.06.2020**
(21) Anmeldenummer: 13703552.3
(22) Anmeldetag: 30.01.2013
(51) Int. Cl.: B60K 37/06, G06F 3/01

(54) **VERFAHREN ZUM BEREITSTELLEN EINER BEDIENVORRICHTUNG IN EINEM FAHRZEUG UND BEDIENVORRICHTUNG FÜR EIN FAHRZEUG**
METHOD FOR PRODUCING AN OPERATING DEVICE IN A VEHICLE AND OPERATING DEVICE FOR A VEHICLE
PROCÉDÉ DE FOURNITURE D'UN DISPOSITIF DE COMMANDE DANS UN VÉHICULE ET DISPOSITIF DE COMMANDE POUR UN VÉHICULE

(30) Priorität: 04.02.2012 DE 102012002271
(43) Veröffentlichungstag der Anmeldung: 10.12.2014
(73) Patentinhaber: Volkswagen Aktiengesellschaft, 38440 Wolfsburg (DE)
(72) Erfinder: JUN, Mi-Ran, 12059 Berlin (DE); PETERSEN, Sönke, 12205 Berlin (DE); HOFMANN, Gustav, 38116 Braunschweig (DE); HAHN, Alexander, 38104 Braunschweig (DE); BUDZYNSKI, Tobias, 13467 Berlin (DE); KUHN, Mathias, 14129 Berlin (DE)
(86) Internationale Anmeldenummer: PCT/EP2013/051747
(87) Internationale Veröffentlichungsnummer: WO 2013/113731

(56) Entgegenhaltungen:
- DE-A1-102009 019 561
- DE-A1-102009 048 043

## Beschreibung

Die vorliegende Erfindung betrifft ein Verfahren zum Bereitstellen einer Bedienvorrichtung in einem Fahrzeug. Bei dem Verfahren werden von einer Steuervorrichtung Graphikdaten erzeugt, die eine Anzeigefläche so ansteuern, dass in einem Bedienzustand Schaltflächen dargestellt werden, die einem mittels der Eingabeeinrichtung ausführbaren Bedienschritt zugeordnet sind und in einem Anzeigezustand den Schaltflächen zugeordnete Anzeigeelemente dargestellt werden, die keinem mittels der Eingabeeinrichtung ausführbaren Bedienschritt zugeordnet sind. Ferner werden im Anzeige- und Bedienzustand separat von den Anzeigeelementen und Schaltflächen Zusatzinformationen dargestellt.

Des Weiteren betrifft die Erfindung eine Bedienvorrichtung für ein Fahrzeug. Die Bedienvorrichtung umfasst eine Eingabeeinrichtung und eine Anzeigevorrichtung mit einer Anzeigefläche. Die Bedienvorrichtung umfasst ferner eine Annäherungserfassungseinrichtung zum Erfassen der Position eines Betätigungsobjekts vor oder auf der Anzeigefläche und eine Steuervorrichtung, die mit der Eingabeeinrichtung und der Anzeigevorrichtung gekoppelt ist. Mittels der Steuervorrichtung sind Graphikdaten erzeugbar, welche die Anzeigefläche so ansteuern, dass in einem Bedienzustand Schaltflächen dargestellt werden, die einem mittels der Eingabeeinrichtung ausführbaren Bedienschritt zugeordnet sind, und in einem Anzeigezustand den Schaltflächen zugeordnete Anzeigeelemente dargestellt werden, die keinem mittels der Eingabeeinrichtung ausführbaren Bedienschritt zugeordnet sind. Im Anzeige- und Bedienzustand werden außerdem separat von den Anzeigeelementen und Schaltflächen Zusatzinformationen dargestellt. Bei einer Annäherung eines Betätigungsobjekts an die Eingabeeinrichtung wechselt die Steuervorrichtung von dem Anzeigezustand in den Bedienzustand.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Damit der Nutzer die auf einer Anzeigefläche dargestellte Information so schnell und intuitiv wie möglich erfassen kann und um ihm außerdem eine schnelle, intuitive und einfache Bedienung von Einrichtungen zu ermöglichen, deren Informationen dargestellt werden, ist aus der WO 2009/024474 A1 ein Verfahren zum Anzeigen von Informationen bekannt, bei dem ein flächiges Objekt auf einem Display graphisch dargestellt wird, wobei das graphische Objekt ein Anzeigefeld und ein Bedienfeld umfasst. Das Anzeigefeld wird auf einer Seite des flächigen graphischen Objekts und das Bedienfeld auf der anderen Seite des flächigen graphischen Objekts dargerstellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht.

Des Weiteren ist aus der WO 2009/024400 A1 ein Verfahren zum Anzeigen von Informationen bekant, bei dem graphische Objekte, welche auf einer Anzeigefläche angezeigt werden, auf einem virtuellen, perspektivisch dargestellten Ring angeordnet dargestellt werden, wobei auf eine Eingabe mittels einer Eingabeeinrichtung eine Recheneinheit einer Benutzerschnittstelleneinrichtung die Graphikdaten für die Anzeige auf der Anzeigefläche so verändert, dass sich die Objekte auf dem virtuellen Ring karussellartig drehen. Dabei wird insbesondere mittels der Eingabeeinrichtung eine Linie auf der Anzeigefläche eingegeben und der Winkel, um den die Objekte gedreht werden, steht in einer direkten Beziehung zu der eingegebenen Länge auf der Anzeigefläche.

Aus der EP 2 181 012 B1 ist schließlich ein Verfahren zum Anzeigen von Informationen mittels eines in einem Kraftfahrzeug befestigten Displays bekannt, bei dem von einer Benutzerschnittstelleneinrichtung Graphikdaten erzeugt werden, die zumindest einen Teilbereich des Displays so ansteuern, dass in einem Bedienzustand Informationen dargestellt werden, die zumindest einem mittels einer Eingabeeinrichtung ausführbaren Bedienschritt zugeordnet sind, und in einem Anzeigezustand Informationen dargestellt werden, die keinen Bedienschritten zugeordnet sind. Bei dem Verfahren wird eine Annäherung eines Objekts an die Eingabeeinrichtung detektiert. Wenn eine solche Annäherung detektiert wurde, wechselt die Benutzerschnittstelleneinrichtung von dem Anzeigezustand in den Bedienzustand.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Aus der DE 10 2009 048043 A1 ist der Oberbegriff des Anspruchs 1 bekannt.

Der vorliegenden Erfindung liegt die Aufgabe zugrunde, ein Verfahren und eine Bedienvorrichtung der eingangs genannten Art bereitzustellen, bei welchen die dargestellten Informationen so schnell und intuitiv wie möglich vom Betrachter erfassbar sind und welche eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und eine Bedienvorrichtung mit den Merkmalen des Anspruchs 6 gelöst. Vorteilhafte Ausgestaltungen und Weiterbildungen ergeben sich aus den abhängigen Ansprüchen.

Bei dem erfindungsgemäßen Verfahren wechselt die Steuervorrichtung nach der Betätigung einer Schaltfläche automatisch vom Bedienzustand in den Anzeigezustand.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

Bei dem Betätigungsobjekt, welches bei dem erfindungsgemäßen Verfahren verwendet wird, kann es sich beispielsweise um die Fingerspitze eines Nutzers oder einen Betätigungsstift handeln. Bei dem erfindungsgemäßen Verfahren wird insbesondere eine Anzeigefläche eingesetzt, auf welcher eine berührungsempfindliche Oberfläche ausgebildet ist. Es wird somit ein sogenannter Touchscreen verwendet.

Bei dem erfindungsgemäßen Verfahren werden im Anzeigezustand die Informationen so dargestellt, dass sie vom Nutzer besonders einfach visuell erfasst werden können. Im Bedienzustand wird die Anzeige dann so verändert, dass der Betrachter zum einen erkennen kann, welche Bereiche der Anzeigefläche als Schaltflächen für die Bedienung ausgebildet sind. Zum anderen kann die Art der Darstellung an die Bedienung einer berührungsempfindlichen Oberfläche auf der Anzeigefläche optimiert werden, indem sich Anzeigeelemente in Schaltflächen umwandeln und dabei anders dargestellt werden.

Will der Nutzer einen Bedienschritt ausführen, braucht er sich nur mit dem Betätigungsobjekt, d.h. zum Beispiel seiner Fingerspitze, der Anzeigefläche annähern. Dies ist eine für den Nutzer intuitive Vorgehensweise, so dass sie zumeist auch vom Fahrer des Fahrzeugs ausgeführt werden kann, ohne dass dieser den Blick vom Fahrgeschehen abwenden muss. Wird eine solche Annäherung an die Anzeigefläche detektiert, wechselt die Steuervorrichtung von dem Anzeigezustand in den Bedienzustand. Wenn der Nutzer nun seinen Blick erst dann kurzfristig auf die Anzeigefläche richtet, nimmt er die Darstellungsart im Bedienzustand wahr und kann auf diese Weise sehr schnell den gewünschten Bedienschritt ausführen. Dabei erleichtert die erfindungsgemäße Umschaltung vom Anzeigezustand in den Bedienzustand es dem Nutzer sich zu orientieren, da die Zusatzinformation außerhalb der Anzeigefläche, den die Anzeigeelemente bzw. Schaltflächen einnehmen, unverändert bleibt.

Gemäß einer bevorzugten Ausgestaltung des erfindungsgemäßen Verfahrens bleibt bei dem Wechsel von dem Anzeigezustand in den Bedienzustand die Darstellung auf der gesamten Anzeigefläche, die im Anzeigezustand nicht von den Anzeigeelementen und im Bedienzustand nicht von den Schaltflächen eingenommen ist, unverändert. Die Anzeigeelemente im Anzeigezustand werden insbesondere in denselben Bereich der Anzeigefläche angezeigt, wie die zugeordneten Schaltflächen im Bedienmodus. Es findet somit nur eine Umwandlung von Anzeigeelementen in Schaltflächen statt, ohne dass sich andere Objekte der Anzeige verändern.

Gemäß einer Ausgestaltung des erfindungsgemäßen Verfahrens werden bei dem Wechsel von dem Anzeigezustand in den Bedienzustand die Anzeigeelemente zur Darstellung als Schaltfläche mit einer anderen Helligkeit, mit einem anderen Kontrast, in einer anderen Farbe und/oder mit einer anderen Graustufe dargestellt. Des Weiteren können bei dem Wechsel von dem Anzeigezustand in den Bedienzustand die Anzeigeelemente zur Darstellung als Schaltfläche mit einer Umrandung versehen werden. Die Darstellung der Zusatzinformation bleibt hingegen bei diesem Wechsel vom Anzeigezustand in den Bedienzustand unverändert. Unter Zusatzinformation wird insbesondere der gesamte Anzeigeinhalt der Anzeigefläche außerhalb der Anzeigeelemente, die in Schaltflächen umgewandelt werden, verstanden.

Hierdurch wird erreicht, dass der Nutzer sich schnell und intuitiv bei dem Übergang vom Anzeigezustand in den Bedienzustand orientieren kann, gleichzeitig jedoch sehr einfach und schnell erfassen kann, bei welchen graphischen Objekten es sich um betätigbare Schaltflächen handelt.

Die erfindungsgemäße Bedienvorrichtung ist dadurch gekennzeichnet, dass bei dem Wechsel von dem Anzeigezustand in den Bedienzustand mittels der Steuervorrichtung Grafikdaten erzeugbar sind, welche die Anzeigefläche so ansteuern, dass die Darstellungsart der Anzeigeelemente in eine Darstellungsart der Schaltflächen wechselt, die Darstellung der Zusatzinformation hingegen unverändert bleibt.

Die erfindungsgemäße Bedienvorrichtung ist insbesondere so ausgebildet, dass sie die vorstehend genannten Verfahrensschritte teilweise oder vollständig ausführen kann. Mittels der Bedienvorrichtung können verschiedene Einrichtungen des Fahrzeugs bedient werden. Die erfindungsgemäße Bedienvorrichtung weist dieselben vorstehend genannten Vorteile wie das erfindungsgemäße Verfahren auf.

Gemäß einer Ausgestaltung der erfindungsgemäßen Bedienvorrichtung ist auf der Anzeigefläche eine berührungsempfindliche Oberfläche ausgebildet. In diesem Fall wird die Berührung einer auf der Anzeigefläche angezeigten Schaltfläche erfasst und als Betätigung der Schaltfläche interpretiert.

Des Weiteren wird bei einer Ausgestaltung der erfindungsgemäßen Bedienvorrichtung eine Annäherung des Betätigungsobjekts an die Anzeigefläche erfasst. Die hierfür vorgesehene Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Des Weiteren betrifft die Erfindung ein Fahrzeug mit der erfindungsgemäßen Bedienvorrichtung. Die Anzeigefläche ist in diesem Fall so angeordnet, dass sie gut von dem Fahrer und/oder dem Beifahrer erreicht werden kann. Beispielsweise ist die Anzeigefläche in der Mittelkonsole des Fahrzeugs angeordnet.

Die Erfindung wird nun anhand eines Ausführungsbeispiels mit Bezug zu den Zeichnungen erläutert.
- Figur 1: zeigt ein Fahrzeug mit dem Ausführungsbeispiel einer erfindungsgemäßen Bedienvorrichtung,
- Figur 2: zeigt den Aufbau der erfindungsgemäßen Bedienvorrichtung zum Ausführen des erfindungsgemäßen Verfahrens und die Verbindung dieser Bedienvorrichtung mit anderen Einrichtungen des Fahrzeugs,
- Figur 3: zeigt eine Schnittansicht der Anzeigevorrichtung der Bedienvorrichtung,
- Figur 4: zeigt eine Anzeige im Anzeigezustand auf der Anzeigefläche der Bedienvorrichtung, die von einem Ausführungsbeispiel des erfindungsgemäßen Verfahrens erzeugt wurden, und
- Figur 5: zeigt eine Anzeige im Bedienzustand auf der Anzeigefläche der Bedienvorrichtung, die von einem Ausführungsbeispiel des erfindungsgemäßen Verfahrens erzeugt wurden.

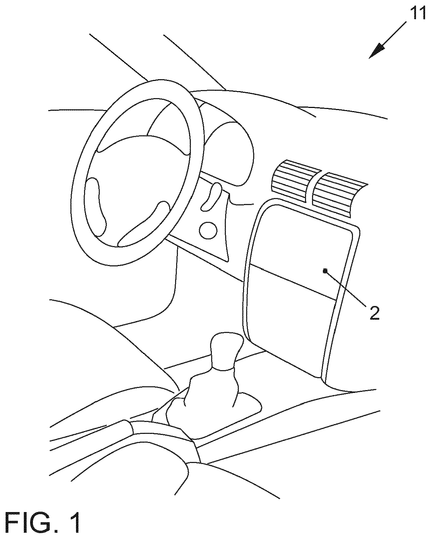

Mit Bezug zu den Figuren 1 bis 3 wird zunächst die Bedienvorrichtung 6 und ihre Anordnung in einem Fahrzeug 11 erläutert:
Die Bedienvorrichtung 6 umfasst eine Anzeigevorrichtung 1 mit einer Anzeigefläche 2, die so im Innenraum des Fahrzeugs 11 angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Die Bedienvorrichtung 6 umfasst ferner eine Steuervorrichtung 3 und eine Eingabevorrichtung 4. Die Steuervorrichtung 3 ist mit der Anzeigevorrichtung 1 verbunden, mit welcher Graphikdaten zur Informationsdarstellung auf der Anzeigefläche 2 erzeugbar sind. Die Eingabevorrichtung ist als berührungsempfindliche Oberfläche 4 auf der Anzeigefläche 2 ausgebildet. Es wird somit ein sogenannter Touchscreen bereitgestellt.

Beispielsweise kann eine Folie über der Anzeigefläche 2 angeordnet sein, mit welcher die Position einer Berührung eines Betätigungsobjekts 12 detektiert werden kann. Bei dem Betätigungsobjekt handelt es sich insbesondere um die Fingerspitze eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze 12 eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 kann eine betätigbare Schaltfläche angezeigt werden.

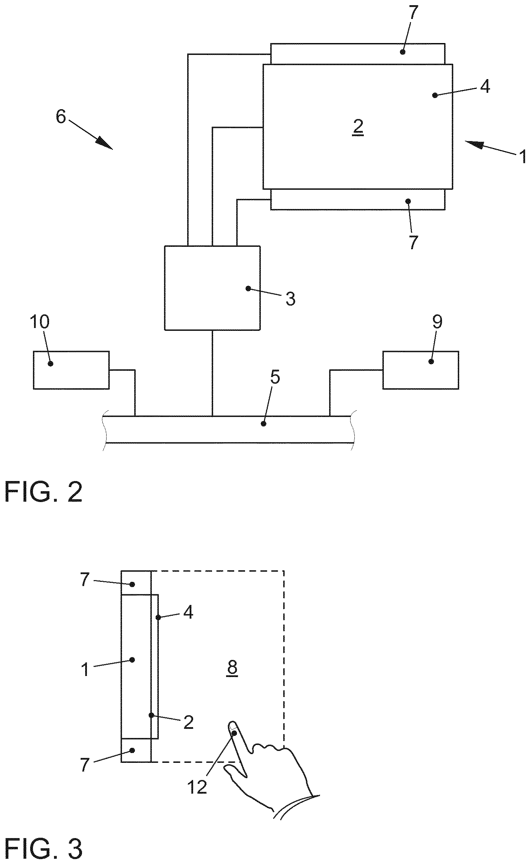

Des Weiteren umfasst die Bedienvorrichtung 6 eine Annäherungserfassungseinrichtung 7. Mittels der Annäherungserfassungseinrichtung 7 kann ein Betätigungsobjekt 12 in einem Detektionsbereich 8 erfasst werden. Der Detektionsbereich 8 ist in Fig. 3 im Detail dargestellt. Der Detektionsbereich 8 ist so gebildet, dass eine Annäherung eines Betätigungsobjekts 12 an die berührungsempfindliche Oberfläche 4 auf der Anzeigefläche 2 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der berührungsempfindlichen Oberfläche 4 verläuft, die berührungsempfindliche Oberfläche 4 vollständig umschließt. In einer Richtung senkrecht zur berührungsempfindlichen Oberfläche 4 reicht der Quader von der berührungsempfindlichen Oberfläche 4 oder unmittelbar vor der berührungsempfindlichen Oberfläche 4 bis zu einem Abstand von z. B. etwa 40 cm. Der Abstand der äußeren Grenze des Detektionsbereichs 8 vor der berührungsempfindlichen Oberfläche 4 wird dabei so gewählt, dass eine Annäherung an die berührungsempfindliche Oberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der berührungsempfindlichen Oberfläche 4 so gewählt werden, dass das Betätigungsobjekt 12 oder ein anderes Objekt so selten wie möglich in den Detektionsbereich 8 bewegt wird, wenn keine Bedienung der berührungsempfindlichen Oberfläche 4 beabsichtigt ist.

Weitere Details zu verschiedenen Ausbildungen der Annäherungserfassungseinrichtung 7 sind beispielsweise in der WO 2011/051361 A1 beschrieben.

Die Annäherungserfassungseinrichtung 7 überträgt die aktuelle Position eines Betätigungsobjekts 12 im Detektionsbereich 8 fortwährend an die Steuervorrichtung 3. In Abhängigkeit von diesem Signal kann die Steuervorrichtung 3 ihren Zustand und die Anzeige auf der Anzeigefläche 2 verändern.

Schließlich ist die Steuervorrichtung 3 mit einem Datenbus 5 gekoppelt. Über diesen Datenbus 5 ist die Steuervorrichtung 3 mit weiteren Einrichtungen 9, 10 des Fahrzeugs 11 verbunden, zu denen Informationen auf der Anzeigefläche 2 angezeigt werden sollen und die mittels der Bedienvorrichtung 6 bedient werden sollen. Mittels Bedienvorrichtung 6 und durch das Verfahren können den Fahrzeuginsassen Informationen angezeigt werden. Ferner können die Fahrzeuginsassen mittels der Bedienvorrichtung 6 Einrichtungen 9, 10 des Fahrzeugs 11 bedienen und die Anzeige steuern.

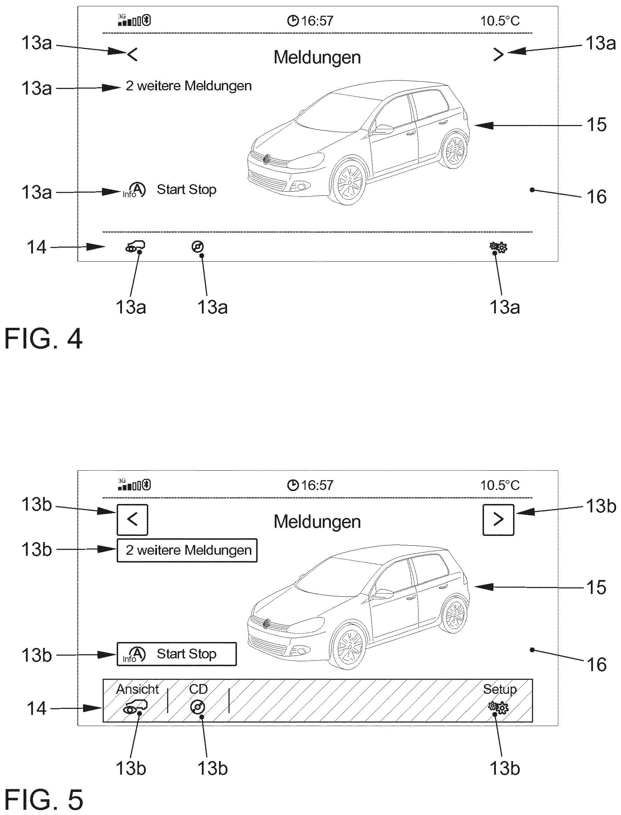

Im Folgenden wird ein Ausführungsbeispiel des erfindungsgemäßen Verfahrens, welches von der vorstehend beschriebenen Bedienvorrichtung 6 ausführbar ist, mit Bezug zu den Figuren 4 und 5 im Detail erläutert:
In Fig. 4 ist ein Beispiel einer Anzeige auf der Anzeigefläche 2 im Anzeigezustand gezeigt. Es werden Meldungen zum Betriebszustand des Fahrzeugs angezeigt. Hierfür wird ein grafisches Objekt 15 dargestellt, welches ein Fahrzeug wiedergibt. Ferner werden verschiedene Anzeigeelemente 13a angezeigt, welche zum Teil in einer unteren Leiste 14 angeordnet sind. Die Anzeigeelemente 13a weisen beispielsweise auf die Anzahl der vorliegenden Meldungen hin. Ferner werden Symbole dargestellt, welche auf einen Wechsel zwischen Anzeigen zu diesen Meldungen hinweisen.

Wenn sich der Nutzer nun mit seiner Fingerspitze 12 der berührungsempfindlichen Oberfläche 4 auf der Anzeigefläche 2 nähert und in den Detektionsbereich 8 eintritt, wechselt die Steuervorrichtung 3 die Anzeige auf der Anzeigefläche 2 automatisch in einen Bedienzustand. Die Anzeige in diesem Bedienzustand ist in Fig. 5 wiedergegeben.

Beim Wechsel von dem Anzeigezustand in den Bedienzustand wechselt die Darstellungsart der Anzeigeelemente 13a in eine Darstellungsart für Schaltflächen 13b. Die Position der Schaltflächen 13b im Bedienzustand entspricht dabei der Position der zugeordneten Anzeigeelemente 13a im Anzeigezustand. Um darauf hinzuweisen, dass es sich bei den Anzeigeelementen 13a nun um Schaltflächen 13b handelt, welche durch Berührung der berührungsempfindlichen Oberfläche 4 bei der entsprechenden Position betätigt werden können, ist bei den Schaltflächen 13b eine Umrandung vorgesehen. Alternativ oder zusätzlich können die Schaltflächen auch in einer anderen Farbe, mit einer anderen Helligkeit, mit einem anderen Kontrast und/oder mit einer anderen Graustufe dargestellt werden. In dem in Fig. 5 gezeigten Beispiel werden die Schaltflächen 13b der Leiste 14 nicht nur umrandet dargestellt, sondern auch mit einer anderen Graustufe dargestellt.

Die Zusatzinformationsfläche 16, die u. a. das grafische Objekt 15 zur Darstellung des Fahrzeugs umfasst, bleibt beim Wechsel von dem Anzeigezustand in den Bedienzustand hingegen unverändert. Die Zusatzinformationsfläche 16 umfasst im Wesentlichen die gesamte Fläche der Anzeigefläche 2 außerhalb der Anzeigeelemente 13a bzw. der Anzeigeelemente 13b. Nur bei den im oberen Bereich der Anzeigefläche 2 angezeigten Statusinformationen zu dem Mobilfunkempfang, der aktuellen Uhrzeit und der aktuellen Temperatur, kann sich möglicherweise eine Veränderung der Anzeige ergeben, wenn sich die entsprechenden Statusinformationen während des Wechsels von dem Anzeigezustand in den Bedienzustand ändern.

Der Nutzer kann nun durch Berühren bzw. Antippen eine der Schaltflächen 13b betätigen. Der Steuervorrichtung 3 wird daraufhin ein entsprechendes Signal übertragen. Die Steuervorrichtung 3 setzt dieses Steuersignal dann um. Gemäß einer Ausbildung des erfindungsgemäßen Verfahrens wechselt die Steuervorrichtung 3 daraufhin, d. h. nach der Betätigung einer der Schaltflächen 13b, automatisch zurück in den Anzeigezustand. Gemäß einer anderen Ausgestaltung des erfindungsgemäßen Verfahrens wechselt die Steuervorrichtung 3 erst dann in den Anzeigezustand zurück, wenn das Betätigungsobjekt 12 den Detektionsraum 8 wieder verlassen hat.

### BEZUGSZEICHENLISTE

- 1: Anzeigevorrichtung
- 2: Anzeigefläche
- 3: Steuervorrichtung
- 4: berührungsempfindliche Oberfläche, Eingabevorrichtung
- 5: Datenbus
- 6: Bedienvorrichtung
- 7: Annäherungserfassungseinrichtung
- 8: Detektionsbereich
- 9: Einrichtung des Fahrzeugs
- 10: Einrichtung des Fahrzeugs
- 11: Fahrzeug
- 12: Betätigungsobjekt, Fingerspitze
- 13a: graphisches Anzeigeelement
- 13b: Schaltfläche
- 14: Leiste
- 15: graphisches Objekt
- 16: Zusatzinformationsfläche

## Patentansprüche

1. Verfahren zum Bereitstellen einer Bedienvorrichtung (6) in einem Fahrzeug (11), bei dem
- von einer Steuervorrichtung (3) Grafikdaten erzeugt werden, die einer Anzeigefläche (2) so ansteuern, dass
- in einem Bedienzustand Schaltflächen (13b) dargestellt werden, die einem mittels der Eingabeeinrichtung (4) ausführbaren Bedienschritt zugeordnet sind,
- in einem Anzeigezustand den Schaltflächen (13b) zugeordnete Anzeigeelemente (13a) dargestellt werden, die keinem mittels der Eingabeeinrichtung (4) ausführbaren Bedienschritt zugeordnet sind, und
- im Anzeige- und Bedienzustand separat von den Anzeigeelementen (13a) und Schaltflächen (13b) Zusatzinformationen dargestellt werden,
- eine Annäherung eines Objekts an die Eingabeeinrichtung (4) detektiert wird und
- bei einer Annäherung eines Betätigungsobjekts (12) an die Eingabeeinrichtung (4) die Steuervorrichtung (3) von dem Anzeigezustand in den Bedienzustand wechselt und
- bei dem Wechsel von dem Anzeigezustand in den Bedienzustand die Darstellungsart der Anzeigeelemente (13a) in eine Darstellungsart der Schaltfläche (13b) wechselt, die Darstellung der Zusatzinformation hingegen unverändert bleibt,
**dadurch gekennzeichnet, dass**
- die Steuervorrichtung (3) nach der Betätigung einer Schaltfläche (13b) automatisch vom Bedienzustand in den Anzeigezustand wechselt.

2. Verfahren nach Anspruch 1,
**dadurch gekennzeichnet,**
**dass** bei dem Wechsel von dem Anzeigezustand in den Bedienzustand die Darstellung auf der gesamten Anzeigefläche (2), die im Anzeigezustand nicht von den Anzeigeelementen (13b) und im Bedienzustand nicht von den Schaltflächen (13b) eingenommen ist, unverändert bleibt.

3. Verfahren nach Anspruch 1 oder 2,
**dadurch gekennzeichnet,**
**dass** die Anzeigeelemente (13b) im Anzeigezustand in demselben Bereich der Anzeigefläche (2) angezeigt werden wie die zugeordneten Schaltflächen (13b) im Bedienmodus.

4. Verfahren nach einem der vorstehenden Ansprüche,
**dadurch gekennzeichnet,**
**dass** bei dem Wechsel von dem Anzeigezustand in den Bedienzustand die Anzeigeelemente (13a) zur Darstellung als Schaltfläche (13b) mit einer anderen Helligkeit, mit einem anderen Kontrast, in einer anderen Farbe und/oder mit einer anderen Graustufe dargestellt werden.

5. Verfahren nach einem der vorstehenden Ansprüche,
**dadurch gekennzeichnet,**
**dass** bei dem Wechsel von dem Anzeigezustand in den Bedienzustand die Anzeigeelemente (13a) zur Darstellung als Schaltfläche (13b) mit einer Umrandung versehen werden.

6. Bedienvorrichtung (6) für ein Fahrzeug mit
- einer Eingabeeinrichtung (4),
- einer Anzeigevorrichtung (1) mit einer Anzeigefläche (2),
- einer Annäherungserfassungseinrichtung (7) zum Erfassen der Position eines Betätigungsobjekts vor oder auf der Anzeigefläche (2),
- einer Steuervorrichtung (3), die mit der Eingabeeinrichtung (4) und der Anzeigevorrichtung (1) gekoppelt ist und mittels derer Graphikdaten erzeugbar sind, welche die Anzeigefläche (2) so ansteuern, dass
- in einem Bedienzustand Schaltflächen (13b) dargestellt werden, die einem mittels der Eingabeeinrichtung (4) ausführbaren Bedienschritt zugeordnet sind,
- in einem Anzeigezustand den Schaltflächen (13b) zugeordnete Anzeigeelemente (13a) dargestellt werden, die keinem mittels der Eingabeeinrichtung (4) ausführbaren Bedienschritt zugeordnet sind, und
- im Anzeige- und Bedienzustand separat von den Anzeigeelementen (13a) und Schaltflächen (13b) Zusatzinformationen dargestellt werden, und
- wobei bei einer Annäherung eines Betätigungsobjekts (12) an die Eingabeeinrichtung (4) die Steuervorrichtung (3) von dem Anzeigezustand in den Bedienzustand wechselt, und
bei dem Wechsel von dem Anzeigezustand in den Bedienzustand mittels der Steuervorrichtung (3) Graphikdaten erzeugbar sind, welche die Anzeigefläche (2) so ansteuern, dass die Darstellungsart der Anzeigeelemente (13a) in eine Darstellungsart der Schaltflächen (13b) wechselt, die Darstellung der Zusatzinformation hingegen unverändert bleibt, **dadurch gekennzeichnet, dass**
- die Steuervorrichtung (3) dazu eingerichtet ist, nach der Betätigung einer Schaltfläche (13b) automatisch vom Bedienzustand in den Anzeigezustand zu wechseln.

7. Fahrzeug mit einer Bedienvorrichtung (6) nach Anspruch 6.

## Claims

1. Method for providing an operating apparatus (6) in a vehicle (11), in which
- a control apparatus (3) generates graphics data which control a display surface (2) in such a manner that
- buttons (13b) which are assigned to an operating step which can be carried out by means of the input device (4) are displayed in an operating state,
- display elements (13a) which are assigned to the buttons (13b) and are not assigned to an operating step which can be carried out by means of the input device (4) are displayed in a display state, and
- additional information is displayed in the display and operating states separately from the display elements (13a) and buttons (13b),
- it is detected when an object approaches the input device (4), and
- if an actuation object (12) approaches the input device (4), the control apparatus (3) changes from the display state to the operating state, and
- during the change from the display state to the operating state, the type of display for the display elements (13a) changes to a type of display for the button (13b), but the display of the additional information remains unchanged, **characterized in that**
- the control apparatus (3) automatically changes from the operating state to the display state after the actuation of a button (13b).

2. Method according to Claim 1,
**characterized**
**in that**, during the change from the display state to the operating state, the display on the entire display surface (2), which is not occupied by the display elements (13b) in the display state and is not occupied by the buttons (13b) in the operating state, remains unchanged.

3. Method according to Claim 1 or 2,
**characterized**
**in that** the display elements (13b) in the display state are displayed in the same region of the display surface (2) as the assigned buttons (13b) in the operating mode.

4. Method according to one of the preceding claims, **characterized**
**in that**, during the change from the display state to the operating state, the display elements (13a) are displayed with a different brightness, with a different contrast, in a different colour and/or with a different greyscale for displaying as a button (13b).

5. Method according to one of the preceding claims, **characterized**
**in that**, during the change from the display state to the operating state, the display elements (13a) are provided with a border for display as a button (13b).

6. Operating apparatus (6) for a vehicle, having
- an input device (4),
- a display apparatus (1) with a display surface (2),
- an approach capture device (7) for capturing the position of an actuation object in front of or on the display surface (2),
- a control apparatus (3) which is coupled to the input device (4) and to the display apparatus (1) and can be used to generate graphics data which control the display surface (2) in such a manner that
- buttons (13b) which are assigned to an operating step which can be carried out by means of the input device (4) are displayed in an operating state
- display elements (13a) which are assigned to the buttons (13b) and are not assigned to an operating step which can be carried out by means of the input device (4) are displayed in a display state, and
- additional information is displayed in the display and operating states separately from the display elements (13a) and buttons (13b), and
- wherein, if an actuation object (12) approaches the input device (4), the control apparatus (3) changes from the display state to the operating state, and
during the change from the display state to the operating state, the control apparatus (3) can be used to generate graphics data which control the display surface (2) in such a manner that the type of display for the display elements (13a) changes to a type of display for the buttons (13b), but the display of the additional information remains unchanged,
**characterized in that**
- the control apparatus (3) is configured to automatically change from the operating state to the display state after the actuation of a button (13b) .

7. Vehicle having an operating apparatus (6) according to Claim 6.

## Revendications

1. Procédé de fourniture d'un arrangement d'opération (6) dans un véhicule (11), avec lequel
- des données graphiques sont générées par un arrangement de commande (3), lesquelles pilotent une surface d'affichage (2) de telle sorte que
- dans un état d'opération, des boutons (13b), qui sont associés à une étape d'opération pouvant être exécutée au moyen d'un dispositif d'entrée (4), sont affichés,
- dans un état d'affichage, des éléments d'affichage (13a) associés aux boutons (13b) sont représentés, lesquels ne sont associés à aucune étape d'opération pouvant être exécutée au moyen du dispositif d'entrée (4), et
- dans un état d'affichage et d'opération, des informations supplémentaires sont représentées séparément des éléments d'affichage (13a) et des boutons (13b),
- une approche d'un objet vers le dispositif d'entrée (4) est détectée et
- lors de l'approche d'un objet d'actionnement (12) vers le dispositif d'entrée (4), l'arrangement de commande (3) change de l'état d'affichage à l'état d'opération et
- lors du changement de l'état d'affichage à l'état d'opération, le mode de représentation des éléments d'affichage (13a) change dans un mode de représentation des boutons (13b), la représentation des informations supplémentaires reste en revanche inchangée, **caractérisé en ce que**
- l'arrangement de commande (3), après l'actionnement d'un bouton (13b), change automatiquement de l'état d'opération à l'état d'affichage.

2. Procédé selon la revendication 1, **caractérisé en ce que** lors du changement de l'état d'affichage à l'état d'opération, la représentation sur l'ensemble de la surface d'affichage (2), qui n'est pas adoptée par les éléments d'affichage (13b) dans l'état d'affichage et n'est pas adoptée par les boutons (13b) dans l'état d'opération, reste inchangée.

3. Procédé selon la revendication 1 ou 2, **caractérisé en ce que** dans l'état d'affichage, les éléments d'affichage (13b) sont affichés dans la même zone de la surface d'affichage (2) que les boutons (13b) associés.

4. Procédé selon l'une des revendications précédentes, **caractérisé en ce que** lors du changement de l'état d'affichage à l'état d'opération, les éléments d'affichage (13a) destinés à être représentés en tant que boutons (13b) sont représentés avec une autre luminosité, avec un autre contraste, dans une autre couleur et/ou avec un autre niveau de gris.

5. Procédé selon l'une des revendications précédentes, **caractérisé en ce que** lors du changement de l'état d'affichage à l'état d'opération, les éléments d'affichage (13a) destinés à être représentés en tant que boutons (13b) sont pourvus d'une bordure.

6. Arrangement d'opération (6) pour un véhicule, comprenant
- un dispositif d'entrée (4),
- un arrangement d'affichage (1) doté d'une surface d'affichage (2),
- un dispositif de détection d'approche (7) destiné à détecter la position d'un objet d'actionnement devant ou sur la surface d'affichage (2),
- un arrangement de commande (3), qui est connecté au dispositif d'entrée (4) et à l'arrangement d'affichage (1) et au moyen duquel peuvent être générées des données graphiques, lesquelles pilotent la surface d'affichage (2) de telle sorte que
- dans un état d'opération, des boutons (13b), qui sont associés à une étape d'opération pouvant être exécutée au moyen du dispositif d'entrée (4), sont affichés,
- dans un état d'affichage, des éléments d'affichage (13a) associés aux boutons (13b) sont représentés, lesquels ne sont associés à aucune étape d'opération pouvant être exécutée au moyen du dispositif d'entrée (4), et
- dans un état d'affichage et d'opération, des informations supplémentaires sont représentées séparément des éléments d'affichage (13a) et des boutons (13b), et
- lors de l'approche d'un objet d'actionnement (12) vers le dispositif d'entrée (4), l'arrangement de commande (3) changeant de l'état d'affichage à l'état d'opération et
lors du changement de l'état d'affichage à l'état d'opération, des données graphiques peuvent être générées au moyen de l'arrangement de commande (3), lesquelles pilotent la surface d'affichage (2) de telle sorte que le mode de représentation des éléments d'affichage (13a) change dans un mode de représentation des boutons (13b), la représentation des informations supplémentaires reste en revanche inchangée,
**caractérisé en ce que**
- l'arrangement de commande (3) est conçu pour, après l'actionnement d'un bouton (13b), changer automatiquement de l'état d'opération à l'état d'affichage.

7. Véhicule équipé d'un arrangement d'opération (6) selon la revendication 6.
